# EUROPEAN PATENT APPLICATION

(11) **EP 4 489 503 A1**
(43) Date of publication of application: **08.01.2025**
(21) Application number: 24186352.1
(22) Date of filing: 03.07.2024
(51) Int. Cl.: H04W 74/06, H04W 84/12

(54) **FAST TRIGGER REQUEST INDICATION**

(30) Priority: 06.07.2023 US 202363525349 P; 27.06.2024 US 202418757327
(71) Applicant: Apple Inc., Cupertino, CA 95014 (US)
(72) Inventor: MEHRNOUSH, Morteza, Cupertino, 95014 (US); BATRA, Anuj, Cupertino, 95014 (US); GHOSH, Chittabrata, Cupertino, 95014 (US); ABOUELSEOUD, Mohamed, Cupertino, 95014 (US); LEE, Wook Bong, Cupertino, 95014 (US)
(74) Representative: Wardle, Callum Tarn

(57) **Abstract**

Disclosed are methods, systems, and computer-readable media configured to perform operations including: determining that an electronic device has at least one item to send to an access point (AP) or to another electronic device; encoding a trigger request message with information associated with the at least one item to be sent; and sending the trigger request message to the AP to request an uplink (UL) resource allocation or a peer-to-peer (P2P) resource allocation.

## Description

### CROSS-REFERENCE TO RELATED APPLICATIONS

This application claims the benefit of U.S. Provisional Patent Application No. 63/525,349, filed July 6, 2023, the entirety of which is incorporated herein by reference.

### BACKGROUND

Many electronic devices communicate with each other using wireless local area networks (WLANs), such as those based on a communication protocol that is compatible with an Institute of Electrical and Electronics Engineers (IEEE) standard, e.g., the IEEE 802.11 standard (also known as "Wi-Fi"). A WLAN typically includes an access point (AP) that provides one or more stations (STAs) with access to another network, such as the Internet. There are many generations of the IEEE 802.11 standard, including 802.11ax (Wi-Fi 6) and 802.11be (Wi-Fi 7).

IEEE 802.11 is a packet-based protocol. Under this protocol, a transmitter, e.g., an AP, packages control information or user data into a protocol data unit (PDU) in a physical layer convergence protocol (PLCP). The PLCP PDU (PPDU) includes a preamble and a data field, among other fields. After generating the PPDU, the AP can send the PPDU to a STA connected to (e.g., associated with) the AP. Communication from the AP to a STA is referred to as the downlink (DL), and the communication from a STA to the AP is referred to as the uplink (UL).

### SUMMARY

This disclosure describes techniques and electronic devices for providing a fast trigger request indication from a STA to an AP to transmit UL data or peer-to-peer (P2P) data. The fast trigger request indication can be transmitted using an A-control subfield in a quality of service (QoS) Null, a UL data frame encoded in a PPDU, a dedicated fast trigger request indication message, or other type of UL message. The A-control subfield or fast trigger request indication (FTRI) field can include one or more bits of information about the UL transmission, including traffic identifier (TID) and/or queue size, as well as optionally one or more other bits, as discussed further herein.

In accordance with one aspect of the present disclosure, a method includes determining that an electronic device has traffic (e.g., at least one item) to send to an AP or to another electronic device; encoding a trigger request message with information relating to the traffic to be sent; and sending the trigger request message to the AP for UL resource allocation or P2P resource allocation.

In accordance with another aspect of the present disclosure, a method includes receiving, from an electronic device, a trigger request message to request an UL resource allocation or a P2P resource allocation, the trigger request message containing information associated with UL traffic to be sent by the electronic device; encoding a trigger frame (TF) with the UL resource allocation or the P2P resource allocation; and transmitting the TF to the electronic device.

In some embodiments, the trigger request message comprises information about the traffic encoded in an A-control subfield.

In some embodiments, the A-control subfield is part of a QoS Null subframe of a control response (CR) frame.

In some embodiments, the A-control subfield is part of a UL PPDU.

In some embodiments, the trigger request message comprises information about the traffic encoded in a dedicated FTRI frame.

In some embodiments, the trigger request comprises: a P2P bit that indicates if the trigger request is for delivering traffic in P2P or between a STA and an infra-AP; a TID field used for triggering per-access category (AC) and TID-to-link mapping (T2LM); a delay bound (DB) field indicating tolerable delay bound or latency requirement of the traffic; QS field that indicates QS of the traffic in bytes (e.g., how much traffic the STA has in a queue to be delivered on the UL or a P2P link).

Some embodiments include receiving the TF from the AP with a resource allocation for sending traffic in the UL or P2P link.

In some embodiments, the electronic device is operating using a single link.

In some embodiments, the electronic device is operating using multiple links.

In some embodiments, the electronic device sends the trigger request message on a first link and receives the TF on a second link that is different from the first link.

Aspects of the embodiments are directed to an apparatus comprising at least one baseband processor and an antenna, the apparatus configured to perform any of the operations described herein.

Aspects of the embodiments are directed to a non-transitory computer-readable-storage medium storing instructions that, when executed by at least one processor, cause the at least one processor to perform any of the operations described herein.

The details of one or more embodiments of these systems and methods are set forth in the accompanying drawings and the description below. Other features, objects, and advantages of these systems and methods will be apparent from the description and drawings, and from the claims.

### BRIEF DESCRIPTION OF THE FIGURES

FIG. 1 illustrates a block diagram of example electronic devices communicating wirelessly, according to some implementations.
FIG. 2A is a schematic diagram illustrating an example message flow between an AP and an electronic device in single link operation for requesting UL resources using an A-control subfield encoded in a control frame or data frame, and resource allocation, according to some implementations.
FIG. 2B is a schematic diagram illustrating an example message flow between an AP and an electric device in multi-link operation (MLO) for requesting UL, resources using A-control subfield encoded in a control frame or data frame, and resource allocation, according to some implementations.
FIG. 3 is a schematic diagram illustrating an example message flow between an AP and an electronic device in single link operation for requesting UL resources or P2P resources using an A-control subfield encoded in a PPDU and resource allocation, according to some implementations.
FIG. 4A is a schematic diagram illustrating an example message flow between an AP and an electronic device in simultaneous transmit and receive (STR) operation for requesting UL resources or P2P resources using a fast trigger request indication, according to some implementations.
FIG. 4B is a schematic diagram illustrating an example message flow between an AP and an electronic device in enhanced multi-link single radio (EMLSR) operation for requesting UL resources or P2P resources using a fast trigger request indication, according to some implementations.
FIG. 5A is a schematic diagram of an example A-control subfield with trigger request information in accordance with embodiments of the present disclosure.
FIG. 5B is a schematic diagram of an example dedicated fast trigger request indicator with trigger request information in accordance with embodiments of the present disclosure.
FIG. 6 illustrates a flowchart of an example method performed by an electronic device for requesting UL resources or P2P resources, according to some implementations.
FIG. 7 illustrates a flowchart of an example method performed by an AP for allocating UL resources or P2P resources, according to some implementations.
FIG. 8 illustrates a block diagram of an example electronic device, according to some implementations.

### DETAILED DESCRIPTION

When a non-AP STA or non-AP multi-link device (MLD) has high priority (HP) packets having latency sensitivity, and needs to deliver the latency sensitive traffic, the non-AP STA or non-AP MLD should be able to indicate, in the UL, to the AP or AP MLD to poll. This disclosure describes techniques for causing (or requesting) an AP or AP MLD to poll a non-AP STA or non-AP MLD.

There are already some procedures for indicating latency sensitive traffic to an AP, like TSPEC (QoS characteristics of a flow), and stream classification service (SCS) mechanism. These are back-and-forth negotiations, and do not account for the immediacy of the UL traffic flow. Also, these techniques do not take into account the dynamic nature of the UL. Currently the specification lacks the capability for the STA to indicate its instant request to be triggered to send its latency sensitive traffic. This disclosure describes techniques through which a traffic indication and/or resource request can be sent by the non-AP STA or non-AP MLD and received by the AP or MLD.

SCS defines a predetermined traffic pattern, which is negotiated in advance, whereas realistic traffic patterns are bursty in nature. This disclosure describes techniques to request the AP to trigger, and allocate resources to the STA, for more spontaneous traffic needs (e.g., in addition to what the AP has already assigned), including high priority or latency sensitive traffic, or if there are a lot of collisions and traffic needs retransmission. The AP as the resource manager can perform resource allocation and inform resource allocation through a TF, which serves as a synchronization frame for the STA to transmit in the UL or P2P. So, instead of independent contention for UL, the AP can assign resources for UL or P2P transmissions. The STA can also indicate additional information about the traffic within the request.

On the AP side, this disclosure describes a mechanism for determining whether the STA has traffic and to send TF with resource allocation.

In addition, this disclosure describes a P2P resource request indication from the STA to the AP for the AP to allocate resources for P2P with tools like a transmit opportunity (TXOP) Sharing triggering (TXS TF) mechanism. If the AP reserves resources for P2P, the AP needs to know the traffic and traffic type to properly allocate the right resources for P2P.

In some embodiments, the STA can indicate, to the AP, the trigger request for being triggered over the same link (single link) or another link (multi-link).

The techniques described herein are applicable to single-link and/or MLO, and can be used in the following scenarios: when all links are busy in DL, and the STA wants to indicate the trigger request to AP; when a STA is transmitting HP traffic over a link in UL, and wants to indicate the trigger request for being polled next; when a STA requests to be triggered on a different link than the one currently being accessed (because of higher bandwidth, T2LM, and so on).

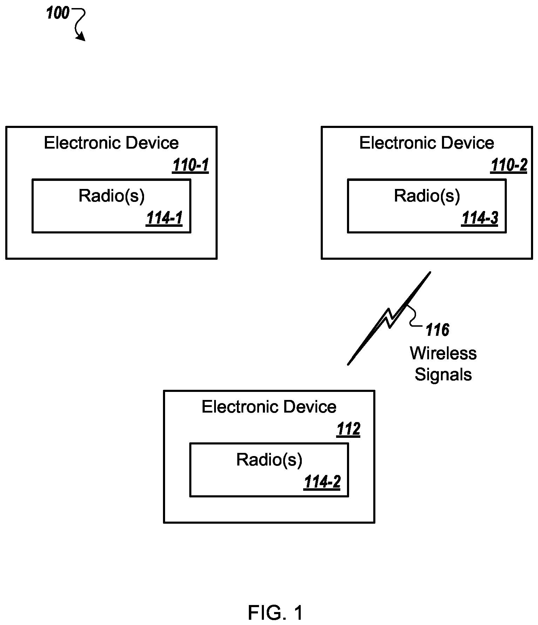

FIG. 1 illustrates a block diagram 100 of an example of electronic devices communicating wirelessly, according to some implementations. Notably, one or more electronic devices 110 (such as a smartphone, a laptop computer, a notebook computer, a tablet, or another such electronic device) and AP 112 can communicate wirelessly in a WLAN, e.g., using an IEEE 802.11 communication protocol. Thus, electronic devices 110 can be associated with or can have a connection with AP 112. For example, electronic devices 110 and AP 112 can wirelessly communicate while: detecting one another by scanning wireless channels, transmitting and receiving beacons or beacon frames on wireless channels, establishing connections (e.g., by transmitting connect requests), and/or transmitting and receiving packets or frames (which can include the request and/or additional information, such as data, as payloads). Note that the AP 112 can provide access to a network, such as the Internet, via an Ethernet protocol, and can be a physical AP or a virtual (or "software") AP that is implemented on a computer or an electronic device. In this specification, electronic devices 110 are sometimes referred to as "recipient electronic devices" or "receiver STAs."

Although the environment shown in FIG. 1 is provided as an example, in alternative implementations, different numbers and/or types of electronic devices can be present. For example, some implementations can include more or fewer electronic devices. As another example, in some implementations, different electronic devices can be transmitting and/or receiving packets or frames. In some implementations, multiple links can be used during communication between electronic devices 110.

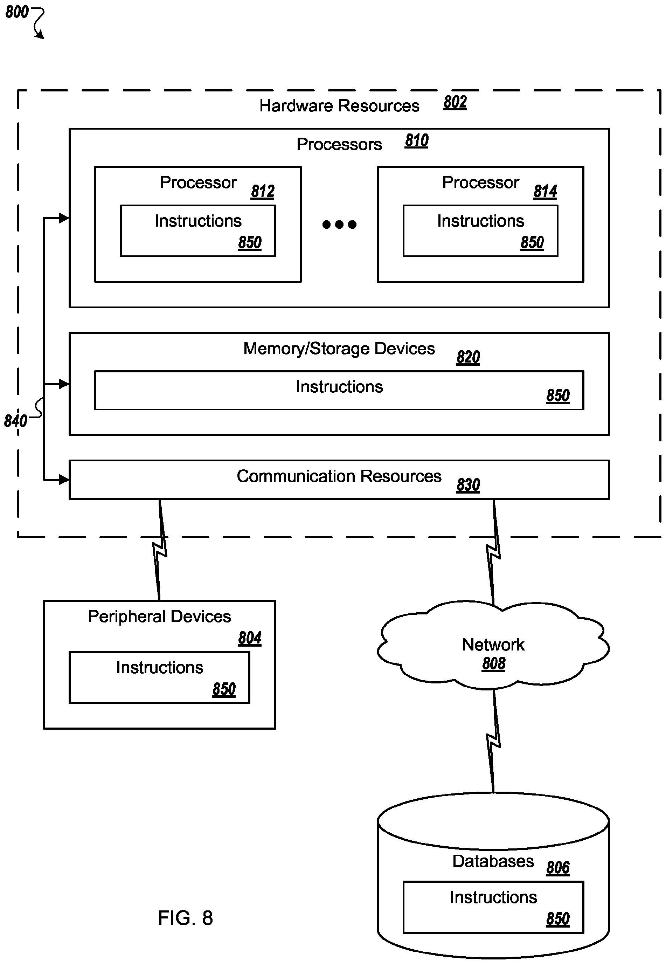

As described further below with reference to FIG. 8, electronic devices 110 and AP 112 can include subsystems, such as a networking subsystem, a memory subsystem, and a processor subsystem. In addition, electronic devices 110 and AP 112 can include radios 114 in the networking subsystems. More generally, electronic devices 110 and AP 112 can include (or can be included within) any electronic devices with networking subsystems that enable electronic devices 110 and AP 112, respectively, to wirelessly communicate with another electronic device. This can include transmitting beacons on wireless channels to enable the electronic devices to make initial contact with or to detect each other, followed by exchanging subsequent data/management frames (such as connect requests) to establish a connection, configure security options, transmit and receive packets or frames via the connection, etc.

As shown in FIG. 1, wireless signals 116 are communicated by one or more radios 114-1 and 114-2 in electronic device 110-1 and AP 112, respectively. For example, as noted previously, electronic device 110-1 and AP 112 can exchange packets or frames using a Wi-Fi communication protocol in a WLAN. Further, one or more radios 114-1 can receive wireless signals 116 that are transmitted by one or more radios 114-2 via one or more links between electronic device 110-1 and AP 112. Alternatively, the one or more radios 114-1 can transmit wireless signals 116 that are received by the one or more radios 114-2.

In some implementations, wireless signals 116 are communicated by one or more radios 114 in electronic devices 110 and AP 112, respectively. For example, one or more radios 114-1 and 114-3 can receive wireless signals 116 that are transmitted by one or more radios 114-2 via one or more links between the electronic devices 110-1 and 110-2, and the AP 112.

In some implementations, the AP 112 can group the electronic devices 110 into a target STA set. The target STA set concept comes from DL multi-user transmission where the AP 112 can transmit to multiple STAs simultaneously in one PPDU using Orthogonal Frequency Division Multiple Access (OFDMA) or multi-user (MU) Multiple Input Multiple Output (MU-MIMO). Here, the target STA set is a set of STAs that can simultaneously be served by the AP 112. The STAs in the set do not need to share the same PHY parameters, such as MCS, number of streams, etc.

In some implementations, the AP 112 can simultaneously communicate with a plurality of electronic devices 110 using multi-user (MU) techniques, such as MU Multiple Input Multiple Output (MU-MIMO). In some examples, the AP 112 communicates with the electronic devices 110 using frequency multiplexing, such that the AP 112 allocates to each of the electronic devices a portion of the overall bandwidth. For example, to simultaneously communicate with four electronic devices over an 80 Megahertz (MHz) bandwidth, the AP 112 transmits a MU-PPDU over the 80 MHz bandwidth. The MU-PPDU includes a sub-PPDU for each of the four electronic devices, where each sub-PPDU (or sub-channel) is allocated 20 MHz, e.g., a respective 20 MHz sub-channel. The AP 112 can use the MU-PPDU to communicate with devices in the same target set, devices in different target sets, or a combination of both.

In some implementations, AP 112 and one or more electronic devices can be compatible with an IEEE 802.11 standard that includes trigger-based channel access, e.g., IEEE 802.11ax. In 802.11ax, Orthogonal Frequency Division Multiple Access (OFDMA) is used to enable simultaneous communications between the AP 112 and multiple electronic devices. OFDMA divides the available physical spectrum into multiple orthogonal sub-channels, or resource units (RUs), which can be allocated to different electronic devices (users). Under the standard, the AP 112 coordinates multi-user OFDMA by broadcasting a TF which, among other things, allocates a RU to each participating electronic device. Each electronic device responds to the TF by transmitting a PPDU to the AP 112 using the allocated RU. The TF can also include power control information. The AP 112 can instruct all electronic devices 110 when to start and stop transmitting. Note that AP 112 and the electronic devices 110 can communicate with one or more legacy electronic devices that are not compatible with the same IEEE 802.11 standard (i.e., that do not use multi-user trigger-based channel access).

In some implementations, processing a packet or frame in one of electronic devices 110 and/or AP 112 can include: receiving wireless signals 116 encoding a packet or a frame; decoding/extracting the packet or frame from received wireless signals 116 to acquire the packet or frame; and processing the packet or frame to determine information contained in the packet or frame (such as data in the payload).

As discussed previously, one or more of electronic devices 110 and AP 112 can communicate with each other. Notably, AP 112 can transmit a PPDU that includes a preamble and a data field. In some implementations, AP 112 can be configured to use concatenated PPDUs (C-PPDUs), e.g., for low latency communications with receiver STAs. A C-PPDU includes a plurality of component PPDUs, each of which includes a preamble and a data payload. As described in more detail below, the C-PPDU includes a plurality of component PPDUs. The first component PPDU is preceded by a first preamble called a "full preamble." The remaining component PPDUs in the C-PPDU are each preceded by respective preambles that are shorter in length than the first preamble. In some implementations, the AP 112 might not perform contention or receive a block acknowledgement (BA) before the plurality of component PPDUs are transmitted.

In accordance with aspects of the present disclosure, a STA can indicate a trigger request to the AP, requesting to be triggered over the same link or another link. The operations described below are applicable to single-link operations and/or MLO.

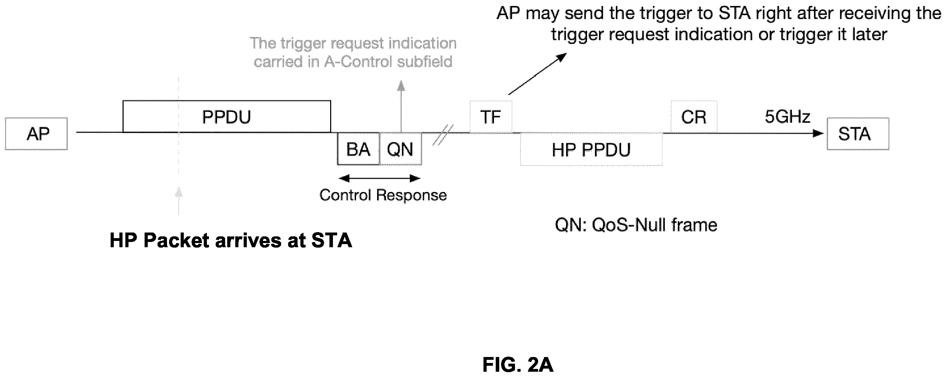

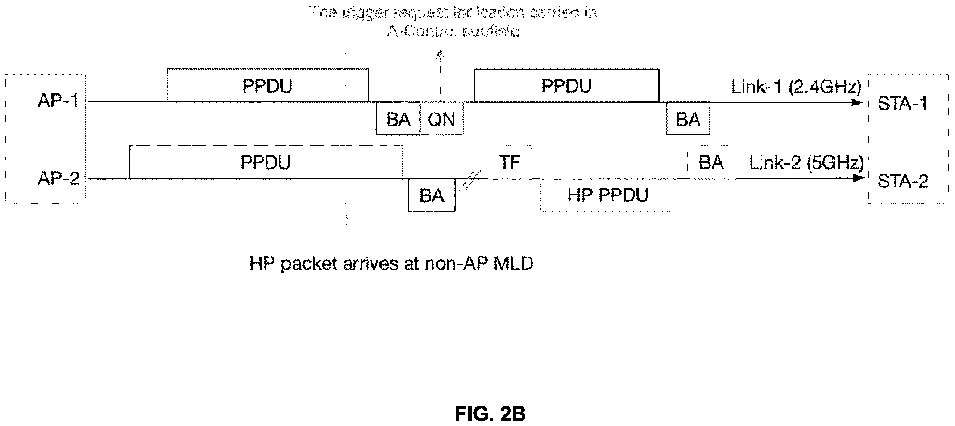

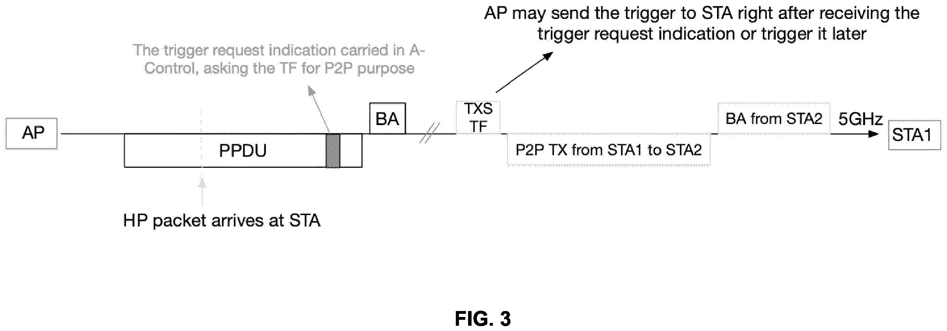

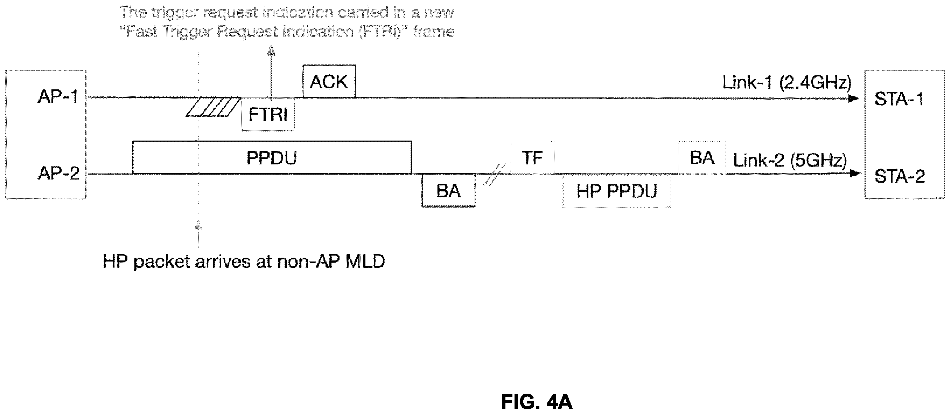

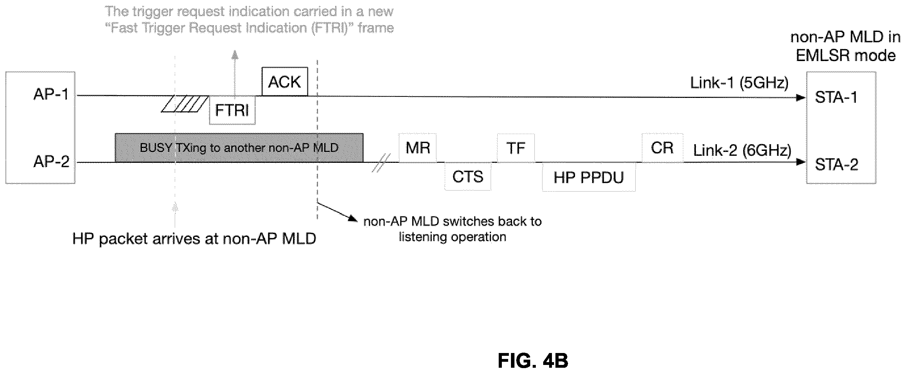

Scenario 1 is where all links are busy in DL when the STA wants to indicate the trigger request to the AP. Scenario 1 for a single link is illustrated by FIG. 2A. Scenario 1 with MLO is illustrated by FIG. 2B. Scenario 2 is where the STA is transmitting HP traffic over a link in UL, and the STA wants to indicate the trigger request to be polled next. Scenario 2 is illustrated by FIG. 3. Scenario 3 is where a STA requests to be triggered on a different link than the one currently being accessing (e.g., because of higher bandwidth, T2LM, or the like). Scenario 3 is illustrated by FIGs. 4A and 4B.

Note that the AP can receive the trigger request and use this information to trigger the STA as soon as possible thereafter, considering the STA's traffic information provided to AP. The AP can use the trigger request as an indication for resource allocation in support of UL transmission, but can respond with a TF with UL or P2P resource allocation information when resources become available.

A STA can request a TF 204 for UL traffic or P2P traffic by sending a fast trigger request, to the AP, in the data frame during the transmission of UL traffic or with a CR frame. For a single-link, the AP upon receiving the trigger request can a) use the current TXOP duration or a frame-burst to trigger the STA, b) contend to trigger the STA if insufficient TXOP duration is available, c) schedule the STA on a UL MU transmission, or d) preempt a PPDU or TXOP/frame-burst to poll the STA in UL. FIG. 2A is a schematic diagram illustrating an example message flow between an AP 212 and a STA 210 in single link operation for requesting UL resources or P2P resources using A-control subfield encoded in a CR frame 202 or data frame, and resource allocation, according to some implementations.

STA 210 is the TXOP responder and indicates the fast trigger request in the CR frame 202 (e.g., BA 206 + A-Control subfield in QoS-Null 208).

In some instances, the AP 212 may send the TF 204 to the STA 210 immediately after receiving the trigger request indication. In some other instances, the AP 212 may trigger the STA 210 after some delay, e.g., based on the delay bound information, resource availability, etc.

FIG. 2B is a schematic diagram illustrating an example message flow between an AP MLD 214 and a non-AP MLD 216 in MLO associated with a request for UL resources or P2P resources, using an A-control subfield encoded in a CR frame 202 or data frame, and resource allocation, according to some implementations.

The non-AP MLD 216 can indicate a request for TF 204 over one of the links through the A-control subfield in an UL PPDU or when sending the CR frame 202 to the DL traffic.

The AP MLD 214 can respond with TF 204 on any of the MLD links enabled with the requesting STA, either during the same TXOP/frame-burst or in a new TXOP initiated by the AP MLD 214.

STA-1 indicates the fast trigger request sent over one link using the A-Control subfield in CR frame 202 that includes a QoS-Null frame 206 or data frame in UL PPDU (as above) when STA-1 has HP traffic.

The AP MLD 214, upon receiving the trigger request, in addition to the procedure mentioned for single-link case, can either a) contend over the same link (link-1) or the other link (link-2) to trigger STA-1, or b) preempt a DL PPDU or TXOP/frame-burst of any link covered by the T2LM of the requested TID, if possible, to poll STA-1 in UL. In the example of FIG. 2B, AP-2 contends over link-2 and triggers STA-1.

FIG. 3 is a schematic diagram illustrating an example message flow between an AP 312 and STA1 310 in single link operation for requesting UL resources or P2P resources using an A-control subfield encoded in a PPDU and resource allocation, according to some implementations.

STA1 310 is the TXOP initiator and does not terminate the current TXOP/frame-burst. STA1 310 indicates to the AP 312 a request for being polled for P2P purposes with another STA, for example. P2P is an example, and the STA1 310 can also be requesting UL resources for communication with the AP 312. The AP 312 sends a TXS TF 302 (mode-2) to reserve the medium for STA1 310 to deliver the P2P traffic 304 to STA2 (not shown).

AP 312 may send the TXS TF 302 for P2P purposes to the STA1 310 after receiving the trigger request indication, or alternatively may trigger the STA1 310 after some delay, e.g., based on the delay bound information, resource availability, etc.

In some embodiments (such as those depicted in FIGs. 4A and 4B), a STA can send, to the AP, an FTRI frame 402 to request a TF 404 for UL traffic or for P2P communication. The AP acknowledges the FTRI frame 402 and schedules a TF 404 on one of the MLD enabled links in response to the request.

FIG. 4A is a schematic diagram illustrating an example message flow between an AP MLD 414 and a non-AP MLD 416 in STR operation for using a fast trigger request indication to request UL resources or P2P resources, according to some implementations.

In the example of FIG. 4A, link-1 has a 20MHz bandwidth and link-2 has an 80MHz bandwidth. STA-1 prefers to use link-2 because of the higher bandwidth or the T2LM, so STA-1 sends the FTRI frame 402 to indicate the request for TF 404. AP-2, upon reception of the information, decides to trigger STA-2 over link-2. AP-2 may trigger STA-2 immediately after receiving the indication or after some delay. Note that, instead of FTRI frame 402, a QoS-Null frame 208 that includes the A-Control subfield can be used.

FIG. 4B is a schematic diagram illustrating an example message flow between the AP MLD 414 and the non-AP MLD 416 in EMLSR operation for requesting UL resources or P2P resources using a fast trigger request indication, according to some implementations.

In the example of FIG. 4B, link-2 is busy due to transmissions from AP-2 to another non-AP MLD (not shown). STA-1 prefers to use link-2 because of the higher bandwidth or T2LM, so STA-1 sends the FTRI frame 402 to indicate the request for TF 404. The AP MLD 414, upon reception of the information, triggers STA-2 over link-2. The AP MLD 414 may trigger the STA immediately after receiving the indication or after some delay.

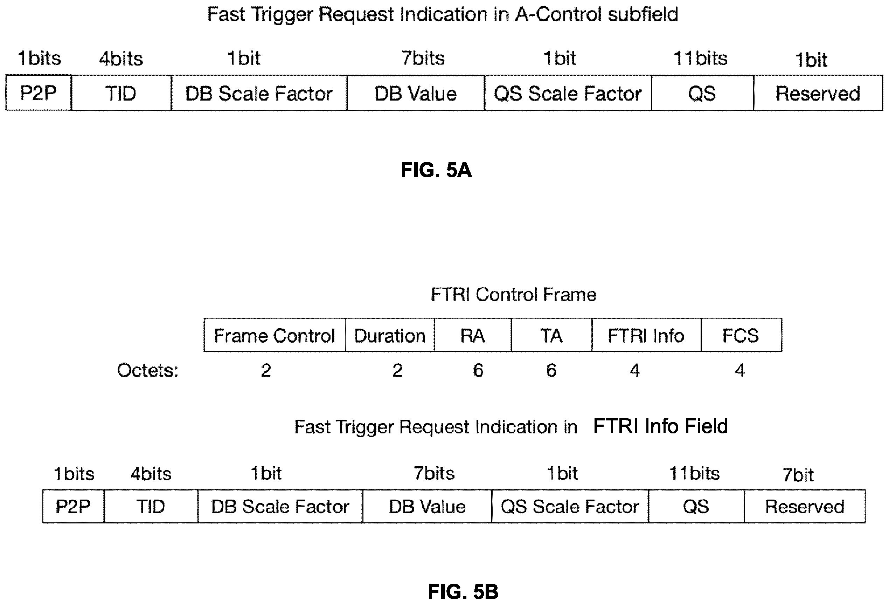

FIG. 5A is a schematic diagram of an A-control subfield with trigger request information in accordance with embodiments of the present disclosure. FIG. 5B is a schematic diagram of a dedicated fast trigger request indicator with trigger request information in accordance with embodiments of the present disclosure.

The indication of fast trigger request can be signaled in one of the following formats: an A-Control subfield sent in the CR frame or Data frame, which is applicable to scenarios 1, 2 and 3; a new data/management/control frame (e.g., FTRI) that can be aggregated in an A-MPDU, which is applicable to scenario 2 and 3; or a new data/management/control frame that can be aggregated in an A-MPDU, which is applicable to both of the preceding formats (e.g., A-Control subfield or FTRI).

The information needed for the fast trigger request indication for an A-Control subfield may include one or more of the following: a P2P bit 502, which indicates if the trigger request is for delivering traffic in P2P or between a STA and an Infra AP; a TID field 504 that indicates a TID of the traffic, which is used for triggering per-AC and helps with a TID-to-link mapping scenario; a DB field 506 indicating a tolerable delay bound associated with the traffic; and a QS field indicating a queue size associated with the traffic, e.g., in bytes.

Similar information as above can be used in the FTRI Info field 510 of the FTRI control frame 512. The information in the fast trigger request indication for A-Control subfield or FTRI control frame 512 may include one or more of the following: a P2P field 502 (e.g., 1 bit) that indicates if the trigger request is for delivering traffic in P2P or between a STA and an Infra AP; a TID field 504 (e.g., 4 bits) that is used for triggering per-AC and also to help with triggering the STA over the link based on the negotiated T2LM; and a DB field (e.g., 8 bits) including, e.g., 1 bit for the resolution (0:256 µs, 1:1 TU) and, e.g., 7 bits for the value. With value 0 for resolution, a delay bound of up to 32.8ms can be indicated, while with value 1, a delay bound of up to 128ms can be indicated.

The information in the fast trigger request indication may also include a QS field 508 (e.g., 12bits), where a maximum PHY data rate at BW320/MCS13/NSS2/GI0.8 is 5.76Gbps. Considering the VI/VO as HP traffic, a maximum TXOP duration of 3ms can be considered. The maximum amount of information that can be included in a PPDU with a 3ms duration is 17.292Mbits or 2.16Mbytes. The QS field 508 includes, e.g., 1 bit for the resolution (0: 256Bytes, 1: 1Kbytes) and, e.g., 11 bits for the value. With value 0 for resolution, up to 0.52Mbytes can be indicated; with value 1, up to 2.05Mbytes can be indicated.

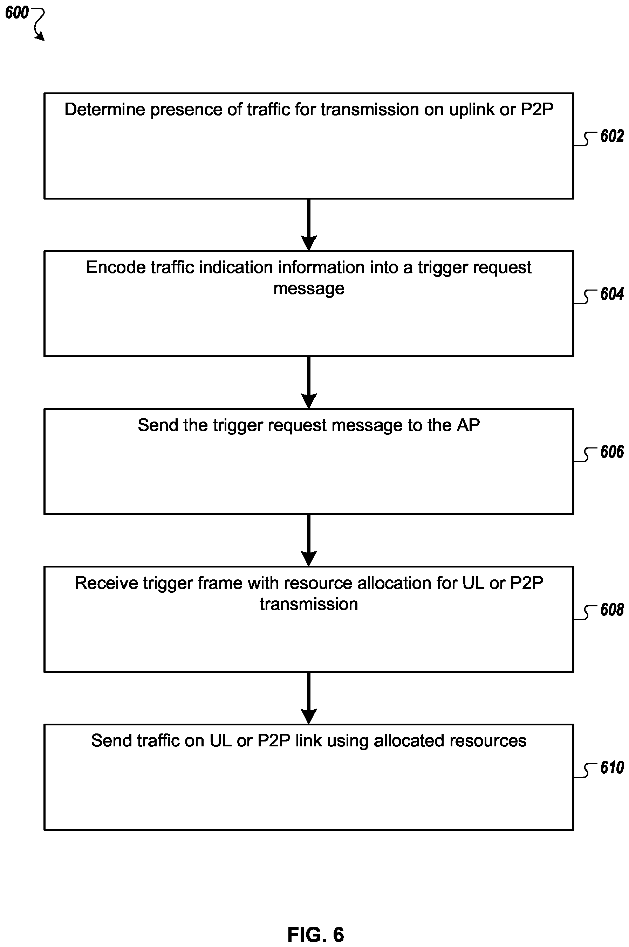

FIG. 6 illustrates a flowchart of an example method performed by an electronic device for requesting UL resources or P2P resources, according to some implementations. For clarity of presentation, the description that follows generally describes method 600 in the context of the other figures in this description. For example, method 600 can be performed by electronic device 100-2 of FIG. 1. It will be understood that method 600 can be performed, for example, by any suitable system, environment, software, hardware, or a combination of systems, environments, software, and hardware, as appropriate. In some implementations, various operations of method 600 can be performed in parallel, in combination, in loops, or in different orders.

At the outset, an electronic device, such as a non-AP STA or non-AP MLD can detect or determine (602) that there is traffic to send on the UL or P2P. The traffic can be high priority traffic or latency sensitive traffic, where the electronic device needs to have a UL resource allocation or P2P resource allocation quickly, without having to undergo lengthy negotiations with the AP for resource allocation. This resource allocation can be in addition to whatever resources have already been allocated to the electronic device, if resource allocation has occurred for the electronic device.

The electronic device can encode (604) traffic indication information into a trigger request message. The electronic device can encode an A-control subfield into a QoS-Null frame and include in the CR frame. The electronic device can also encode an A-control subfield within the UL PPDU, e.g., by encoding traffic indication information in a MPDU. The electronic device can also encode a dedicated FTRI frame instead of an A-control subfield in QoS-Null frame.

The electronic device can then send (606) the trigger request to the AP. Depending on the scenario, the trigger request can be sent with the CR frame, UL PPDU, or FTRI frame.

The electronic device can then receive (608) a TF from the AP with a resource allocation for the UL transmission. The electronic device can then send (610) the traffic using the UL resources or P2P resources, in accordance with the resource allocation.

The example method 600 shown in FIG. 6 can be modified or reconfigured to include additional, fewer, or different steps (not shown in FIG. 6), which can be performed in the order shown or in a different order.

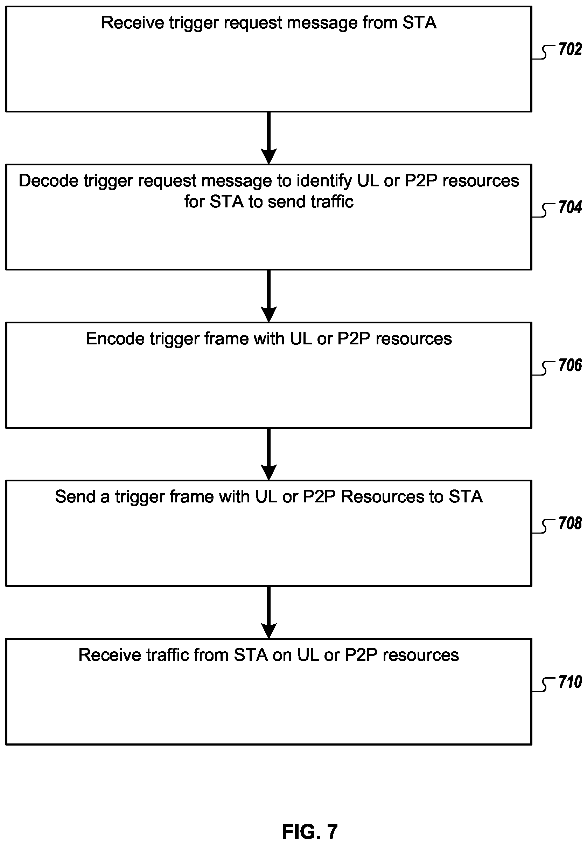

FIG. 7 illustrates a flowchart of an example method performed by an AP for allocating UL resources or P2P resources, according to some implementations. The AP can receive (702) a trigger request from the electronic device. The AP can decode (704) the trigger request to identify appropriate UL or P2P resources for the electronic device to send traffic. The AP can encode (706) a TF with a UL or P2P resource allocation for the electronic device. The AP can send (708) the TF to the electronic device. In some cases, the AP can then receive (710) traffic on the UL resources. If the resource allocation is for P2P, the other electronic device can receive traffic on the P2P resources.

The example method 700 shown in FIG. 7 can be modified or reconfigured to include additional, fewer, or different steps (not shown in FIG. 7), which can be performed in the order shown or in a different order.

FIG. 8 illustrates a block diagram of an electronic device 800, according to some implementations. The electronic device 800 can be a mobile telephone, a smartwatch, an AP, a router, a wireless speaker, an Internet-of-Things (IoT) device, a portable computing device, among other examples. The electronic device 800 includes hardware resources 802 that include one or more processors (or processor cores) 810, one or more memory/storage devices 820, and one or more communication resources 830, each of which can be communicatively coupled via a bus 840.

The one or more processors 810 include one or more devices configured to perform computational operations. For example, the one or more processors 810 can include one or more microprocessors, application-specific integrated circuits (ASICs), microcontrollers, graphics processing units (GPUs), programmable-logic devices, and/or one or more digital signal processors (DSPs). The processors 810 can include, for example, a processor 812 and a processor 814. The processor(s) 810 can be, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radio-frequency integrated circuit (RFIC), another processor (including those discussed herein), or any suitable combination thereof.

The memory/storage devices 820 can include main memory, disk storage, or any suitable combination thereof. The memory/storage devices 820 can include, but are not limited to, any type of volatile or nonvolatile memory such as dynamic random-access memory (DRAM), static random-access memory (SRAM), erasable programmable read-only memory (EPROM), electrically erasable programmable read-only memory (EEPROM), Flash memory, solid-state storage, etc. In some implementations, the memory/storage devices 820 are coupled to one or more high-capacity mass-storage devices (not shown). In some examples, memory/storage devices 820 can be coupled to a magnetic or optical drive, a solid-state drive, or another type of mass-storage device. In these examples, the memory/storage devices 820 can be used by electronic device 800 as fast-access storage for often-used data, while the mass-storage device is used to store less frequently used data.

The communication resources 830 can include interconnection or network interface components or other suitable devices to communicate with one or more peripheral devices 804 or one or more databases 806 via a network 808. For example, the communication resources 830 can include wired communication components (e.g., for coupling via USB), cellular communication components, NFC components, Bluetooth^{®} (or Bluetooth^{®} Low Energy) components, Wi-Fi^{®} components, and other communication components.

The communication resources 830 include one or more devices configured to couple to and communicate on a wired and/or wireless network (i.e., to perform network operations), such as: control logic, one or more interface circuits and a set of antennas (or antenna elements) in an adaptive array that can be selectively turned on and/or off by control logic to create a variety of optional antenna patterns or "beam patterns." Alternatively, instead of the set of antennas, in some examples, electronic device 800 includes one or more nodes, e.g., a pad or a connector, which can be coupled to the set of antennas. Thus, electronic device 800 might or might not include the set of antennas. For example, communication resources 830 can include a Bluetooth^{™} networking system, a cellular networking system (e.g., a 3G/4G/5G/6G network such as UMTS, LTE, etc.), a universal serial bus (USB) networking system, a networking system based on the standards described in IEEE 802.11 (e.g., a Wi-Fi^{®} networking system), an Ethernet networking system, and/or another networking system.

In some implementations, communication resources 830 includes one or more radios, such as a wake-up radio that is used to receive wake-up frames and wake-up beacons, and a main radio that is used to transmit and/or receive frames or packets during a normal operation mode. The wake-up radio and the main radio can be implemented separately (such as using discrete components or separate integrated circuits) or in a common integrated circuit.

The communication resources 830 include processors, controllers, radios/antennas, sockets/plugs, and/or other devices used for coupling to, communicating on, and handling data and events for each supported networking system. Note that mechanisms used for coupling to, communicating on, and handling data and events on the network for a network system are sometimes collectively referred to as a "network interface" for the network system.

Instructions 850 can comprise software, a program, an application, an applet, an app, or other executable code for causing at least any of the processors 810 to perform any one or more of the methodologies discussed herein. The instructions 850 can reside, completely or partially, within at least one of the processors 810 (e.g., within the processor's cache memory), the memory/storage devices 820, or any suitable combination thereof. In some implementations, any portion of the instructions 850 can be transferred to the hardware resources 802 from any combination of the peripheral devices 804 or the databases 806. Accordingly, the memory of processors 810, the memory/storage devices 820, the peripheral devices 804, and the databases 806 are examples of computer-readable and machine-readable media.

While the preceding discussion used a Wi-Fi communication protocol as an illustrative example, in other implementations a wide variety of communication protocols and, more generally, wireless communication techniques can be used. Thus, the communication techniques can be used in a variety of network interfaces. Furthermore, while some of the operations in the preceding implementations were implemented in hardware or software, in general the operations in the preceding implementations can be implemented in a wide variety of configurations and architectures. Therefore, some or all of the operations in the preceding implementations can be performed in hardware, in software or a combination of both. For example, at least some of the operations in the communication techniques can be implemented using instructions 850, operating system (such as a driver for an interface circuit in communication resources 830) or in firmware in an interface circuit in communication resources 830. Additionally or alternatively, at least some of the operations in the communication techniques can be implemented in a physical layer, such as hardware in an interface circuit in communication resources 830. In some implementations, the communication techniques are implemented, at least in part, in a MAC layer and/or in a physical layer in an interface circuit in communication resources 830.

While the preceding implementations illustrated the use of wireless signals in one or more bands of frequencies, in some implementations, electromagnetic signals in one or more different frequency bands are used to determine the range. For example, these signals can be communicated in one or more bands of frequencies, including: a microwave frequency band, a radar frequency band, 900 MHz, 2.4 GHz, 5 GHz, 6 GHz, 60 GHz, and/or a band of frequencies used by a Citizens Broadband Radio Service, by LTE, 5G, or any other communication system.

Although specific components are used to describe electronic device 800, in some implementations, different components and/or subsystems can be present in electronic device 800. For example, electronic device 800 can include one or more additional processing subsystems, memory subsystems, networking subsystems, and/or display subsystems. Additionally, one or more of the subsystems might not be present in electronic device 800. In some implementations, electronic device 800 can include one or more additional subsystems that are not shown in FIG. 8. In some implementations, electronic device can include an analysis subsystem that performs at least some of the operations in the communication techniques. Although separate subsystems are shown in FIG. 8, in some implementations some or all of a given subsystem or component can be integrated into one or more of the other subsystems or component(s) in electronic device 800.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

As described above, one aspect of the present technology may relate to the gathering and use of data available from specific and legitimate sources to allow for interaction with a second device for a data transfer. The present disclosure contemplates that in some instances, this gathered data may include personal information data that uniquely identifies or can be used to identify a specific person. Such personal information data can include demographic data, location-based data, online identifiers, telephone numbers, email addresses, home addresses, data or records relating to a user's health or level of fitness (e.g., vital signs measurements, medication information, exercise information), date of birth, or any other personal information.

The present disclosure recognizes that the use of such personal information data, in the present technology, can be used to the benefit of users. For example, the personal information data can be used to provide for secure data transfers occurring between a first device and a second device. The personal information data may further be utilized for identifying an account associated with the user from a service provider for completing a data transfer.

The present disclosure contemplates that those entities responsible for the collection, analysis, disclosure, transfer, storage, or other use of such personal information data will comply with well-established privacy policies and/or privacy practices. In particular, such entities would be expected to implement and consistently apply privacy practices that are generally recognized as meeting or exceeding industry or governmental requirements for maintaining the privacy of users. Such information regarding the use of personal data should be prominent and easily accessible by users, and should be updated as the collection and/or use of data changes. Personal information from users should be collected for legitimate uses only. Further, such collection/sharing should occur only after receiving the consent of the users or other legitimate basis specified in applicable law. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations that may serve to impose a higher standard. For instance, in the US, collection of or access to certain health data may be governed by federal and/or state laws, such as the Health Insurance Portability and Accountability Act (HIPAA); whereas health data in other countries may be subject to other regulations and policies and should be handled accordingly.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, the present technology can be configured to allow users to select to "opt in" or "opt out" of participation in the collection of personal information data during registration for services or anytime thereafter. For example, a user may "opt in" or "opt out" of having information associated with an account of the user stored on a user device and/or shared by the user device. In addition to providing "opt in" and "opt out" options, the present disclosure contemplates providing notifications relating to the access or use of personal information. For instance, a user may be notified upon downloading an application that their personal information data will be accessed and then reminded again just before personal information data is accessed by the application. In some instances, the user may be notified upon initiation of a data transfer of the device accessing information associated with the account of the user and/or the sharing of information associated with the account of the user with another device.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing identifiers, controlling the amount or specificity of data stored (e.g., collecting location data at city level rather than at an address level), controlling how data is stored (e.g., aggregating data across users), and/or other methods such as differential privacy.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be selected and delivered to users based on aggregated non-personal information data or a bare minimum amount of personal information, such as the content being handled only on the user's device or other non-personal information available to the content delivery services.

## Claims

1. A method comprising:
determining that an electronic device has at least one item to send to an access point (AP) or to another electronic device;
encoding a trigger request message with information relating to the at least one item; and
sending the trigger request message to the AP to request an uplink (UL) resource allocation or a peer-to-peer (P2P) resource allocation.

2. The method of claim 1, wherein the trigger request message encodes the information relating to the at least one item in an A-control subfield.

3. The method of claim 2, wherein the A-control subfield is part of a quality of service (QoS) Null subframe of a control response (CR) frame or is part of a UL physical layer protocol data unit (PPDU).

4. The method of claim 1, wherein the trigger request message encodes the information relating to the at least one item in a dedicated fast trigger request indicator (FTRI) frame.

5. The method of claim 1, wherein the trigger request message comprises:
a P2P bit that indicates whether the trigger request message is associated with communicating the at least one item over a P2P connection or between a STA and an infrastructure AP;
a traffic identifier (TID) field that triggers per access category (AC) and assists with TID-to-link mapping (T2LM);
a delay bound (DB) field indicating a tolerable delay bound of the at least one item; and
a queue size (QS) field indicating a size of the at least one item the STA has queued for delivery on the UL.

6. The method of claim 1, further comprising receiving, from the AP, a trigger frame (TF) with a resource allocation for sending the at least one item on a UL to the AP or to a P2P device.

7. The method of claim 7, wherein the electronic device sends the trigger request message on a first link and receives the TF on a second link that is different from the first link.

8. The method of claim 1, wherein the electronic device is operating using multiple links.

9. A method comprising:
receiving, from an electronic device, a trigger request message that requests an uplink (UL) resource allocation or a peer-to-peer (P2P) resource allocation, the trigger request message comprising information associated with at least one item to be sent by the electronic device;
encoding a trigger frame (TF) with the UL resource allocation or the P2P resource allocation; and
sending the TF to the electronic device.

10. The method of claim 10, wherein the trigger request message encodes the information relating to the at least one item in an A-control subfield and optionally the A-control subfield is part of a quality of service (QoS) Null subframe of a control response (CR) fame or is part of a UL physical layer protocol data unit (PPDU).

11. The method of claim 10, wherein the trigger request message encodes the information relating to the at least one item in a dedicated fast trigger request indicator (FTRI) frame.

12. The method of claim 10, wherein the trigger request message comprises:
a P2P bit that indicates whether the trigger request message is associated with communicating the at least one item over a P2P connection or between a STA and an infrastructure AP;
a traffic identifier (TID) field that triggers per access category (AC) and assists with TID-to-link mapping (T2LM);
a delay bound (DB) field indicating a tolerable delay bound of the at least one item; and
a queue size (QS) field indicating a size of the at least one item the STA has queued for delivery on the UL.

13. The method of claim 10, wherein the electronic device is operating using multiple links or the electronic device sends the trigger request message on a first link and receives the TF on a second link that is different from the first link.

14. An apparatus of baseband processor circuitry configured to perform operations comprising:
determining that at least one data item is to be sent to an access point (AP) or to a second electronic device;
encoding a trigger request message with information associated with the at least one data item; and
outputting, to an interface, a signal corresponding to the trigger request message, wherein the trigger request message requests, from the AP, an uplink (UL) resource allocation or a peer-to-peer (P2P) resource allocation.

15. The apparatus of claim 18, wherein the trigger request message encodes the information relating to the at least one item in an A-Control subfield, and optionally the A-control subfield is part of a quality of service (QoS) Null subframe of a control response (CR) frame.
